# EUROPÄISCHE PATENTANMELDUNG

(11) **EP 0 810 715 A2**
(43) Veröffentlichungstag der Anmeldung: **03.12.1997**
(21) Anmeldenummer: 97108024.7
(22) Anmeldetag: 16.05.1997
(51) Int. Cl.: H02K 5/00, H02K 5/22

(54) **Elektrische Maschine**

(30) Priorität: 29.05.1996 DE 19621568
(71) Anmelder: SIEMENS AKTIENGESELLSCHAFT, 80333 München (DE)
(72) Erfinder: Lipot, Hans-Werner, Dipl. Ing. (FH), 97616 Bad Neustadt (DE); Demmer, Achim, Dipl. Ing., 97688 Bad Kissingen (DE)

(57) **Zusammenfassung**

Die Erfindung betrifft eine elektrische Maschine, mit einem am Maschinengehäuse angeordneten Klemmenkasten, an dem das Leistungsschild (5) der Maschine angebracht ist. Eine einwandfreie Ermittlung der Machinendaten ist dadurch gewährleistet, daß das Leistungsschild (5) bzw. ein zusätzliches Leistungsschild im Innern des Klemmenkastens (2) angebracht ist.

## Beschreibung

Die Erfindung betrifft eine elektrische Maschine mit einem am Maschinengehäuse angeordneten Klemmenkasten, an dem das Leistungsschild der Maschine angebracht ist.

Bei elektrischen Maschinen kommt es häufig vor, daß die Leistungsschilder entsprechend der am Aufstellort der Maschine herrschenden Verhälnisse stark verschmutzen oder korridieren. Es kann auch vorkommen , daß das Leistungsschild abgerissen wird oder in sonstiger Weise verloren geht. Somit lassen sich die Daten der Maschine nicht mehr ermitteln. Eine klare Identifikation der Maschinendaten muß aber jederzeit möglich sein.

Der Erfindung liegt die Aufgabe zugrunde eine Mschine der eingangs beschriebenen Art so auszubilden, daß die Maschinendaten jederzeit ohne große Umstände ermittelbar sind.

Die Lösung der gestellten Aufgabe gelingt nach der Erfindung dadurch, daß das Leistungsschild bzw. ein zusätzliches Leistungsschild im Innern des Klemmenkastens angebracht ist. Hierdurch ist das Leistungsschild vor allen äußeren Einwirkungen geschützt. Im Bedarfsfalle können durch Öffnen des Klemmenkastens die Maschinendaten jederzeit festgestellt werden.

Das Anbringen des Leistungsschildes bzw. des zusätzlichen Leistungsschildes erfordert nahezu keinen. Aufwand, wenn es in eine an einer Innenwand des Klemmenkastens vorgesehene Tasche eingefügt wird.

Es besteht aber auch die Möglichkeit das Leistungsschild bzw. das zusätzliche Leistungsschild an der Innenseite des den Klemmenkasten verschließenden Klemmenkastendeckels anzubringen. Dadurch wird das Leistungsschild sowohl vor einer Zerstörung geschützt als auch gleichzeitig unverlierbar gesichert.

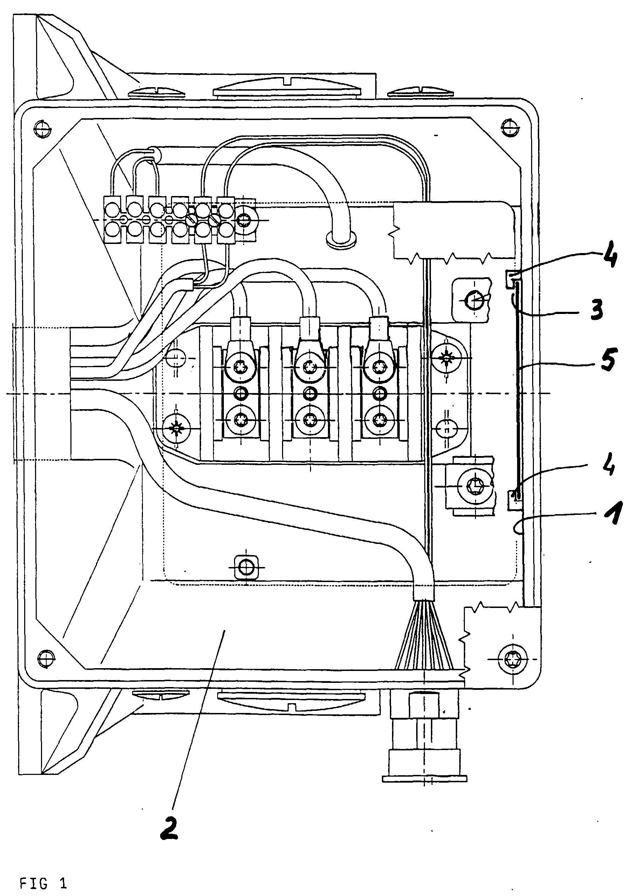

Ein in der Zeichnung dargestelltes Ausführungsbeispiel zeigt einen geöffneten Klemmenkasten einer elektrischen Maschine.

An einer Innenwand 1 eines Klemmenkastens 2 ist eine Tasche 3 angeformt, die im wesentlichen aus einandergegenüber-liegenden U-förmigen Halteleisten 4 besteht. In diese U-förmigen Halteleisten 4 ist ein Leistungsschild 5 eingefügt. Dieses Leistungsschild 5 kann das Originalleistungsschild der Maschine oder auch ein zusätzliches Leistungsschild 5 sein.

## Patentansprüche

1. Elektrische Maschine, mit einem am Maschinengehäuse angeordneten Klemmenkasten, an dem das Leistungsschild (5) der Maschine angebracht ist,
**dadurch gekennzeichnet**,
daß das Leistungsschild (5) bzw. ein zusätzliches Leistungsschild im Innern des Klemmenkastens (2) angebracht ist.

2. Elektrische Masschine nach Anspruch 1,
**dadurch gekennzeichnet**,
daß das Leistungsschild (5) bzw. das zusätzliche Leistungsschild in eine an einer Innenwand (1) des Klemmenkastens (2) vorgesehene Tasche (3) eingefügt ist.

3. Elektrische Masschine nach Anspruch 1,
**dadurch gekennzeichnet**,
daß das Leistungsschild (5) bzw. das zusätzliche Leistungsschild an der Innenseite des den Klemmenkasten (2) verschließenden Klemmenkastendeckels angebracht ist.
